# EUROPEAN PATENT APPLICATION

(11) **EP 4 096 125 A1**
(43) Date of publication of application: **30.11.2022**
(21) Application number: 21744786.1
(22) Date of filing: 21.01.2021
(51) Int. Cl.: H04J 14/02

(54) **OPTICAL SIGNAL TRANSMISSION METHOD, APPARATUS, AND DEVICE**

(30) Priority: 23.01.2020 CN 202010076376
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: WANG, Dong, Beijing 100032 (CN); LI, Yunbo, Beijing 100032 (CN); CAI, Qian, Beijing 100032 (CN); SUN, Jiang, Beijing 100032 (CN); ZHANG, Dechao, Beijing 100032 (CN); LI, Han, Beijing 100032 (CN)
(74) Representative: Novagraaf Technologies
(86) International application number: PCT/CN2021/073106
(87) International publication number: WO 2021/147957

(57) **Abstract**

Embodiments of the present disclosure provide an optical signal transmission method, apparatus, and device. The method at a first device side comprises: n first colored optical modules respectively transmit optical signals with the frequency being f and the wavelengths respectively being λ1-λn, wherein λ1-λn are different from each other; and in-band optical layer operation, administration, and maintenance (OAM) information with the modulation frequency being k1-kn is separately superimposed on the optical signals with the wavelengths respectively being λ1-λn.

## Description

### CROSS-REFERENCE TO RELATED APPLICATION

This application claims priority to Chinese Patent Application No. 202010076376.6 filed on January 23, 2020, the disclosure of which is hereby incorporated by reference in its entirety.

### TECHNICAL FIELD

The present disclosure relates to the field of communication technologies, and in particular, to a method, apparatus and device for optical signal transmission.

### BACKGROUND

Optical layer Operation Administration and Maintenance (OAM) is a key technology in the evolution of optical transport networks. At present, there are two solutions including an out-of-band method and an in-band method. The out-of-band method may realize abundant optical layer monitoring information, but extra channel resources are required to be occupied, and a detection light source and a detection receiving apparatus are required to be introduced.

Facing lightweight OAM requirements for a 5G front-haul network and wavelength-level management and control requirements for a large-capacity optical transport network, the in-band method is expected to become an important evolution direction of an optical layer OAM technology.

In the in-band optical layer OAM technology, a low-speed signal modulation and demodulation unit is integrated in an optical module, and a monitoring signal is loaded onto an envelope of a carried service signal by means of amplitude or frequency modulation, so as to share an optical fiber and channel resources with the carried service signal. In this way, the channel resources are saved, and the transparently transmitted monitoring signal and the carried service signal are protocol independent.

At present, potential application scenarios of the in-band optical layer OAM technology, such as the 5G front-haul network or the large-capacity optical transport network, adopt a Wavelength Division Multiplexing (WDM) technology. Different wavelengths correspond to separate optical modules, and detections at a receiving end are also in one-to-one correspondence.

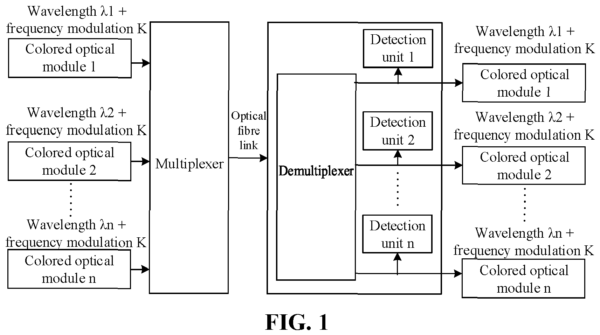

A semi-active system oriented to 5G front-haul is taken as an example, its architecture diagram is shown in FIG. 1. Different colored optical modules 1 to N at a far end transmit optical signals with different wavelengths, respectively. Each module is superimposed with in-band optical layer OAM information with the same modulation frequency. During the receiving at a local end, for each channel, that is, each wavelength, the wavelength is subjected to optical splitting and then injected into a corresponding detection unit for demodulation.

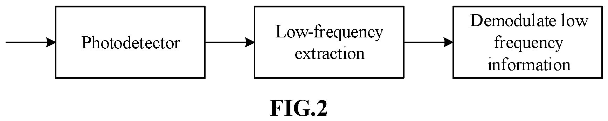

As shown in FIG. 2, a demodulation process mainly includes: performing optical-to-electrical conversion by a photodetector, extracting low-speed in-band OAM information by a low-frequency extraction unit, and performing demodulation on the in-band OAM information by a low-frequency demodulation unit.

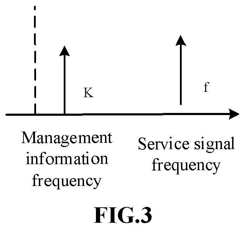

As shown in FIG. 3, a frequency of the in-band OAM information (i.e., management information) is k, which is far less than a frequency f of the service signal.

For typical S111 physical stations, one physical station corresponds to three Active Antenna Units (AAUs). Under a 160M spectrum, each AAU has two 25G optical modules; and when a single fiber bidirectional WDM technology is adopted, twelve 25G WDM channels with different wavelengths are required. Therefore, twelve in-band OAM detection systems (including optical splitters and detection units and the like) are correspondingly required at the receiving end, resulting in increasing of a system cost and potential fault points.

### SUMMARY

The present disclosure provides a method, apparatus and device for optical signal transmission, so as to solve a problem of a high system cost in the related art.

In order to solve the above technical problem, embodiments of the present disclosure provide the following solutions.

An embodiment of the present disclosure provides a method for optical signal transmission, applied to a first equipment. The first equipment includes n first colored optical modules, where n is an integer greater than 1. The method includes the following operation.

The n first colored optical modules transmit n optical signals with a frequency of f and wavelengths of λ1 to λn, respectively, λ1 to λn being different from each other, and in-band Operation, Administration and Maintenance (OAM) information of optical layer with modulation frequencies of k1 to kn being added on the n optical signals with the wavelengths of λ1 to λn, respectively.

Optionally, the method for optical signal transmission further includes that: a first multiplexer multiplexes the n optical signals added with the in-band OAM information with the modulation frequencies of k1 to kn, to obtain multiplexed optical signals.

Optionally, the method for optical signal transmission further includes that: the multiplexed optical signals are transmitted to a second equipment through an optical fibre link.

Optionally, f is greater than any one of k1 to kn.

Optionally, the method for optical signal transmission further includes that: the n first colored optical modules receive optical signals transmitted from a second equipment and demultiplexed by a first demultiplexer.

An embodiment of the present disclosure further provides a method for optical signal transmission, applied to a second equipment. The second equipment includes n second colored optical modules, where n is an integer greater than 1. The method includes the following operation.

Multiplexed optical signal transmitted from a first equipment are received. The multiplexed optical signals are optical signals obtained by multiplexing n optical signals with a frequency of f and wavelengths of λ1 to λn, added with in-band Operation, Administration and Maintenance (OAM) information with modulation frequencies of kl to kn, respectively.

Optionally, the operation that the multiplexed optical signals transmitted from the first equipment are received includes that: the multiplexed optical signals transmitted from the first equipment are received through an optical fibre link.

Optionally, the method for optical signal transmission further includes the following operations.

A first photodetector in a first detection unit directly performs optical-to-electrical conversion of the multiplexed optical signals, to generate electrical signals at a plurality of frequencies.

A first multi-frequency demodulation unit in the first detection unit extracts and demodulates, from the electrical signals at the plurality of frequencies, n pieces of low-speed in-band OAM information with the modulation frequencies of k1 to kn, respectively.

Optionally, the method for optical signal transmission further includes that: a second demultiplexer demultiplexes the multiplexed optical signals to obtain the n optical signals, the n optical signals having the wavelengths of λ1 to λn and being added with the in-band OAM information with the modulation frequencies of kl to kn, respectively.

Optionally, the second demultiplexer transmits each of the n optical signals obtained after demultiplexing to a respective one of the n second colored optical modules.

Optionally, f is greater than any one of k1 to kn.

Optionally, the method for optical signal transmission further includes that: the n second colored optical modules respectively transmit n optical signals with the frequency of f and the wavelengths of λ1 to λn, λ1 to λn being different from each other, and in-band OAM information of optical layer with the modulation frequencies of k1 to kn being added on the n optical signals with the wavelengths of λ1 to λn, respectively.

Optionally, the method for optical signal transmission further includes that: a second multiplexer multiplexes the n optical signals added with the in-band OAM information with the modulation frequencies of k1 to kn, to obtain multiplexed optical signals.

Optionally, the method for optical signal transmission further includes the following operations.

A second photodetector in a second detection unit directly performs optical-to-electrical conversion of the multiplexed optical signals, to generate electrical signals at a plurality of frequencies.

A second multi-frequency demodulation unit in the second detection unit extracts and demodulates, from the electrical signals at the plurality of frequencies, n pieces of low-speed in-band OAM information with the modulation frequencies of kl to kn, respectively.

Optionally, the method for optical signal transmission further includes that: the multiplexed optical signals are transmitted to the first equipment through an optical fibre link.

An embodiment of the present disclosure further provides an apparatus for optical signal transmission, applied to a first equipment. The first equipment includes n first colored optical modules, where n is an integer greater than 1. The apparatus includes as follows.

The n first colored optical modules are configured to transmit n optical signals with a frequency of f and wavelengths of λ1 to λn, respectively, λ1 to λn being different from each other, and in-band Operation, Administration and Maintenance (OAM) information of optical layer with modulation frequencies of kl to kn being added on the n optical signals with the wavelengths of λ1 to λn, respectively.

Optionally, the apparatus for optical signal transmission further includes a first multiplexer. The first multiplexer is configured to multiplex the n optical signals added with the in-band OAM information with the modulation frequencies of kl to kn, to obtain multiplexed optical signals.

Optionally, the first multiplexer is configured to transmit the multiplexed optical signals to a second equipment through an optical fibre link.

Optionally, f is greater than any one of kl to kn.

Optionally, the apparatus for optical signal transmission further includes the n first colored optical modules being configured to receive optical signals transmitted from a second equipment and demultiplexed by a first demultiplexer.

An embodiment of the present disclosure further provides a device for optical signal transmission. The device includes n first colored optical modules, where n is an integer greater than 1. The n first colored optical modules are configured to transmit n optical signals with a frequency of f and wavelengths of λ1 to λn, respectively, λ1 to λn being different from each other, and in-band Operation, Administration and Maintenance (OAM) information of optical layer with modulation frequencies of kl to kn being added on the n optical signals with the wavelengths of λ1 to λn, respectively.

An embodiment of the present disclosure further provides an apparatus for optical signal transmission, applied to a second equipment. The second equipment includes n second colored optical modules, where n is an integer greater than 1. The apparatus includes a receiving module.

The receiving module is configured to receive multiplexed optical signals transmitted from a first equipment, the multiplexed optical signals being optical signals obtained by multiplexing n optical signals with a frequency of f and wavelengths of λ1 to λn, added with in-band Operation, Administration and Maintenance (OAM) information with modulation frequencies of kl to kn, respectively.

Optionally, the receiving module is configured to receive, through an optical fibre link, the multiplexed optical signals transmitted from the first equipment.

Optionally, the apparatus for optical signal transmission further includes a first detection unit. The first detection unit includes a first photodetector and a first multi-frequency demodulation unit.

The first photodetector is configured to directly perform optical-to-electrical conversion of the multiplexed optical signals, to generate electrical signals at a plurality of frequencies.

The first multi-frequency demodulation unit is configured to extract and demodulate, from the electrical signals at the plurality of frequencies, n pieces of low-speed in-band OAM information with the modulation frequencies of k1 to kn, respectively.

Optionally, the apparatus for optical signal transmission further includes a second demultiplexer, configured to perform demultiplexing on the multiplexed optical signals to obtain the n optical signals, the n optical signals having the wavelengths of λ1 to λn, and being added with the in-band OAM information with the modulation frequencies of kl to kn, respectively.

Optionally, the second demultiplexer is configured to transmit each of the n optical signals to a respective one of the n second colored optical modules.

Optionally, f is greater than any one of k1 to kn.

Optionally, the apparatus for optical signal transmission further includes the n second colored optical modules being configured to transmit n optical signals with the frequency of f and the wavelengths of λ1 to λn, respectively, λ1 to λn being different from each other, and in-band OAM information of optical layer with the modulation frequencies of kl to kn being added on the n optical signals with the wavelengths of λ1 to λn, respectively.

Optionally, the apparatus for optical signal transmission further includes a second multiplexer, configured to multiplex the n optical signals added with the in-band OAM information with the modulation frequencies of k1 to kn, to obtain multiplexed optical signals.

Optionally, the apparatus for optical signal transmission further includes a second detection unit. The second detection unit includes a second photodetector and a second multi-frequency demodulation unit.

The second photodetector is configured to directly perform optical-to-electrical conversion of the multiplexed optical signals, to generate electrical signals at a plurality of frequencies.

The second multi-frequency demodulation unit is configured to extract and demodualte, from the electrical signals at the plurality of frequencies, n pieces of low-speed in-band OAM information with the modulation frequencies of k1 to kn, respectively.

Optionally, the apparatus for optical signal transmission further includes that the multiplexed optical signals are transmitted to the first equipment through an optical fibre link.

An embodiment of the present disclosure further provides a device for optical signal transmission. The device includes n second colored optical modules, where n is an integer greater than 1. The device further includes a receiver.

The receiver is configured to receive multiplexed optical signals transmitted from a first equipment, the multiplexed optical signals being optical signals obtained by multiplexing n optical signals with a frequency of f and wavelengths of λ1 to λn, added with in-band Operation, Administration and Maintenance (OAM) information with modulation frequencies of kl to kn, respectively.

An embodiment of the present disclosure further provides a computer-readable storage medium, including an instruction that, when executed by a computer, causes the computer to perform the method described above.

The above solutions of the present disclosure include at least the following beneficial effects.

Through the above solutions of the present disclosure, different colored optical modules are used for transmitting the optical signals with different wavelengths, added with the multiple pieces of in-band OAM information of optical layer with different modulation frequencies; and at the receiving end, all carriers are injected into the same detection unit for unified demodulation. Compared with a single-channel low-frequency modulation information method and system, such methods greatly simplify the system architecture and significantly reduce the system cost.

### BRIEF DESCRIPTION OF THE DRAWINGS

FIG. 1 is a schematic diagram of architecture of a semi-active system oriented to 5G front-haul in the related art.
FIG. 2 is a schematic flowchart of demodulation of low-speed in-band OAM information in the related art.
FIG. 3 is a schematic diagram of an electrical signal including frequency information in the related art.
FIG. 4 is a schematic flowchart of a method for optical signal transmission by a first equipment according to an embodiment of the present disclosure.
FIG. 5 is a schematic diagram of architecture of a 5G-oriented semi-active system based on multi-channel low-frequency modulation according to an embodiment of the present disclosure.
FIG. 6 is a schematic flowchart of a method for optical signal transmission by a second equipment according to an embodiment of the present disclosure.
FIG. 7 is another schematic flowchart of a method for optical signal transmission by a second equipment according to an embodiment of the present disclosure.
FIG. 8 is a schematic diagram of architecture of a detection unit of a receiving-end equipment according to an embodiment of the present disclosure.
FIG. 9 is a schematic diagram of an electrical signal including frequency information of the present disclosure.
FIG. 10 is another schematic diagram of architecture of a 5G-oriented semi-active system based on multi-channel low-frequency modulation according to an embodiment of the present disclosure.
FIG. 11 is still another schematic diagram of architecture of a 5G-oriented semi-active system based on multi-channel low-frequency modulation according to an embodiment of the present disclosure.

### DETAILED DESCRIPTION

Exemplary embodiments of the present disclosure will be described in more detail below with reference to the accompanying drawings. Although the exemplary embodiments of the present disclosure are illustrated in the drawings, it should be understood that the present disclosure may be implemented in various forms and should not be limited by the embodiments set forth herein. On the contrary, these embodiments are provided for more thorough understanding of the present disclosure, and to fully convey a scope of the present disclosure to those skilled in the art.

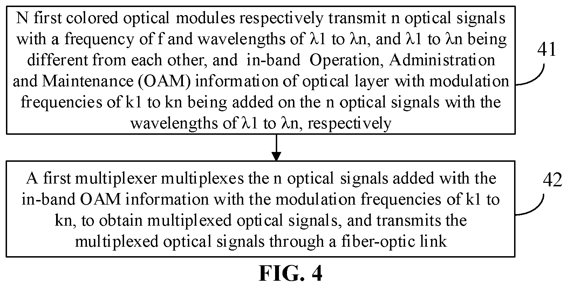

As shown in FIG. 4, an embodiment of the present disclosure provides a method for optical signal transmission, applied to a first equipment. The first equipment includes n first colored optical modules, where n is an integer greater than 1. The method includes an operation 41.

In the operation 41, n first colored optical modules transmit n optical signals with a frequency of f and wavelengths of λ1 to λn, respectively, λ1 to λn being different from each other, and in-band OAM information of optical layer with modulation frequencies of kl to kn being added on the n optical signals with the wavelengths of λ1 to λn, respectively. Optionally, f is greater than any one of k1 to kn. When the OAM information with the modulation frequencies of kl to kn are added on the optical signals with the wavelengths of λ1 to λn, respectively, the OAM information can be added on the optical signals with the wavelengths of λ1 to λn by means of amplitude modulation or the like.

In the embodiment, in addition to transmitting the optical signals with different wavelengths, different colored optical modules also need to add the in-band optical layer OAM information with different modulation frequencies. At a receiving end, all carriers are injected into the same detection unit for unified demodulation. Compared with a single-channel low-frequency modulation information method and system, such a method greatly simplifies the system architecture and significantly reduces the system cost.

In an optional embodiment of the present disclosure, the method for optical signal transmission further includes an operation 42.

In the operation 42, a first multiplexer multiplexes the n optical signals added with the in-band OAM information with the modulation frequencies of kl to kn, to obtain multiplexed optical signals. Further, the multiplexed optical signals are transmitted through an optical fibre link. Specifically, the multiplexed optical signals are transmitted to a second equipment through the optical fibre link.

In an optional embodiment of the present disclosure, the method for optical signal transmission further includes an operation 43.

In the operation 43, the n first colored optical modules of the first equipment receive optical signals transmitted from a second equipment and demultiplexed by a first demultiplexer.

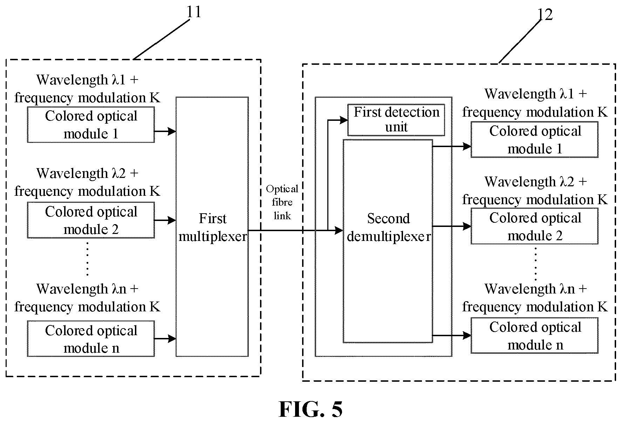

As shown in FIG. 5, FIG. 5 is a schematic diagram of architecture of a 5G-oriented semi-active system based on multi-channel low-frequency modulation. In the system, a first equipment 11 (e.g., a far-end equipment) includes multiple first colored optical modules and a first multiplexer. The first colored optical module transmits an optical signal with a wavelength of λn, carrying high-speed service information (a frequency being f), such as 10G or 25G; and generate low-speed in-band optical layer OAM information with a modulation frequency of kn (KHz - MHz) and loads the same to the high-speed optical signal with the wavelength of λn and the frequency of f. The ability to generate n pieces of the low-speed in-band optical layer OAM information with n modulation frequencies is required. The multiplexer performs Wavelength Division Multiplexing (WDM) on n optical signals with different wavelengths (and the frequency of f) carrying in-band optical layer OAM information (with different modulation frequencies of kn), and then injects multiplexed optical signals into an optical fibre link for transmitting to a local-end equipment, such as a second equipment 12 in FIG. 5.

In the above embodiment of the present disclosure, at the far-end, different colored optical modules 1 to n respectively transmit n optical signals with different wavelengths of λ1 to λn, At the same time, the respective colored optical modules add, on the n optical signals with different wavelengths of λ1 to λn, in-band optical layer OAM information with different modulation frequencies of kl to kn, respectively. The n optical signals with different wavelengths carrying the in-band optical layer OAM information are transmitted from the optical modules to the first multiplexer, and then are wavelength-division multiplexed into WDM signals which are injected to an optical fibre link for transmission.

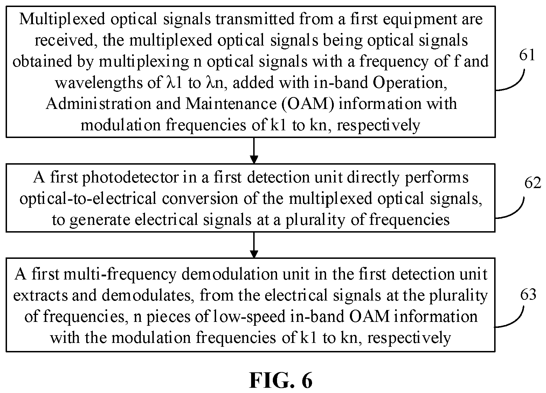

As shown in FIG. 6, an embodiment of the present disclosure provides a method for optical signal transmission, applied to a second equipment. The second equipment includes n second colored optical modules, where n is an integer greater than 1. The method includes an operation 61.

In the operation 61, multiplexed optical signals transmitted from a first equipment are received, the multiplexed optical signals being optical signals obtained by multiplexing n optical signals with a frequency of f and wavelengths of λ1 to λn, added with in-band OAM information with modulation frequencies of k1 to kn, respectively. Specifically, the multiplexed optical signals transmitted from the first equipment are received through an optical fibre link. Optionally, f is greater than any one of kl to kn.

In an optional embodiment of the present disclosure, the method for optical signal transmission further includes an operation 62 and an operation 63.

In the operation 62, a first photodetector in a first detection unit directly performs optical-to-electrical conversion of the multiplexed optical signals, to generate electrical signals at multiple frequencies.

In the operation 63, a first multi-frequency demodulation unit in the first detection unit extracts and demodulates, from the electrical signals at the multiple frequencies, n pieces of low-speed in-band OAM information with the modulation frequencies of kl to kn, respectively.

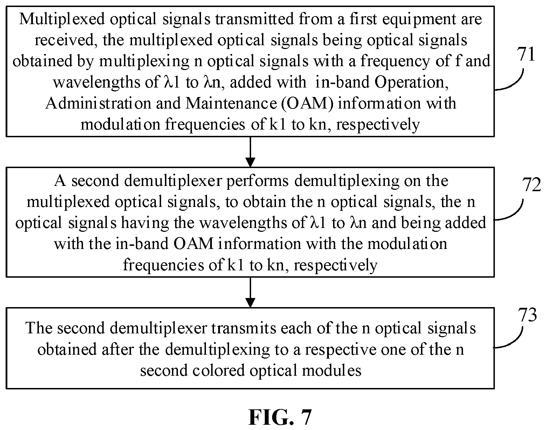

As shown in FIG. 7, in an optional embodiment of the present disclosure, a method for optical signal transmission includes an operation 71 and an operation 72.

In the operation 71, multiplexed optical signals transmitted from a first equipment are received, the multiplexed optical signals being optical signals obtained by multiplexing n optical signals with a frequency of f and wavelengths of λ1 to λn, added with in-band OAM information with modulation frequencies of k1 to kn, respectively. Specifically, the multiplexed optical signals transmitted from the first equipment are received through an optical fibre link. Optionally, f is greater than any one of kl to kn.

In the operation 72, a second demultiplexer performs demultiplexing on the multiplexed optical signals to obtain the n optical signals, the n optical signals having the wavelengths of λ1 to λn, and being added with the in-band OAM information with the modulation frequencies of kl to kn, respectively.

Optionally, the method for optical signal transmission further includes an operation 73.

In the operation 73, the second demultiplexer transmits each of the n optical signals obtained after the demultiplexing to a respective one of the n second colored optical modules.

A specific implementation process of the second equipment will be described below with reference to FIG. 5, FIG. 8 and FIG. 9.

The second equipment mainly includes a multi-channel low frequency modulation information detection unit and a second demultiplexer.

The multi-channel low frequency modulation information detection unit includes a photodetector and a multi-frequency demodulation unit. The photodetector directly performs optical-to-electrical conversion of n WDM signals with different wavelengths carrying the in-band optical layer OAM information, to generate electrical signals with multiple frequencies. The multi-frequency demodulation unit simultaneously extracts and demodulates n pieces of low-speed in-band OAM information with the modulation frequencies of kl to kn.

The second demultiplexer performs wavelength division demultiplexing on the n optical signals with different wavelengths (and the frequency of f) carrying the in-band optical layer OAM information (with different modulation frequencies of kn), and then transmits the demultiplexed optical signals to the corresponding colored optical modules for receiving.

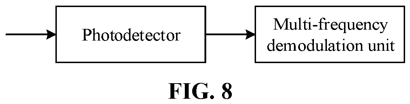

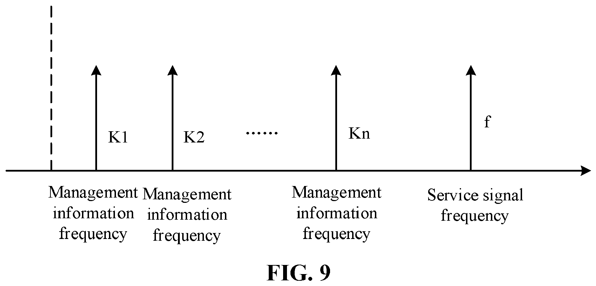

On the receiving end of the system, the n WDM signals with different wavelengths carrying the in-band optical layer OAM information are directly injected into the same photodetector for optical-to-electrical conversion. The electrical signals obtained through the optical-to-electrical conversion have multiple frequencies, as shown in FIG. 8 and FIG. 9.

Then, the electrical signals with the multiple frequencies are injected into the multi-frequency demodulation unit which simultaneously extracts and demodulates N pieces of low-speed in-band OAM information with the modulation frequencies of kl to kn. It is to be noted that different wavelengths λ1 to λn of the optical signals and different modulation frequencies k1 to kn of the in-band optical layer OAM information are only used to distinguish, but not to limit corresponding relationships.

A flow of the afore-mentioned method for optical signal transmission of the present disclosure includes as follows.
(1) The colored optical module of the far-end equipment transmits the optical signal with the wavelength of λn, and at the same time generates the low-speed in-band optical layer OAM information with the modulation frequency of kn and loads the same to the high-speed optical signal with the wavelength of λn and the frequency of f.
(2) The multiplexer of the far-end equipment performs wavelength division multiplexing on the n optical signals with different wavelengths (and the frequency of f) carrying the in-band optical layer OAM information (with different modulation frequencies of kn), and injects WDM signals into the optical fibre link for transmission.
(3) An active device of the local-end equipment receives the WDM signals, and injects, through an optical splitter, a part of the WDM signals into the multi-channel low frequency modulation information detection unit, and transmits the other part of the WDM signals to the demultiplexer.
(4) The multi-channel low frequency modulation information detection unit directly performs, through the photodetector, optical-to-electrical conversion of the n WDM signals with different wavelengths carrying the in-band optical layer OAM information, to generate the electrical signals with the multiple frequencies, and further simultaneously extracts and demodulates n pieces of low-speed in-band OAM information with the modulation frequencies of kl to kn.
(5) The demultiplexer performs wavelength division demultiplexing on the n optical signals with different wavelengths (and the frequency of f) carrying the in-band optical layer OAM information (with different modulation frequencies of kn), and transmits the demultiplexed optical signals to the corresponding colored optical modules for receiving.

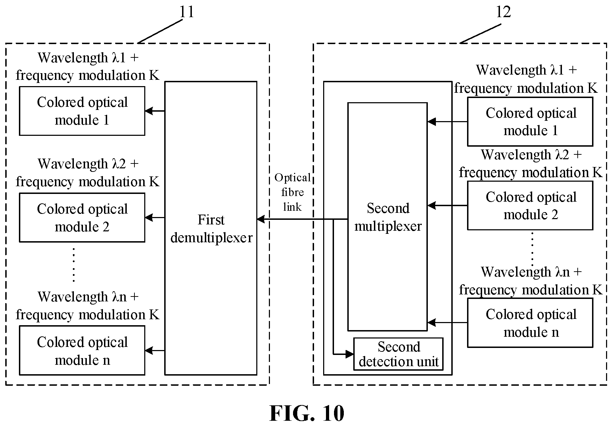

As shown in FIG. 10, in an optional embodiment of the present disclosure, the method for optical signal transmission further includes the following operation.

The n second colored optical modules of the second equipment (e.g., the local-end equipment) respectively transmit n optical signals with the frequency of f and the wavelengths of λ1 to λn, λ1 to λn being different from each other, and in-band OAM information of optical layer with the modulation frequencies of k1 to kn being added on the n optical signals with the wavelengths of λ1 to λn, respectively.

Optionally, the method for optical signal transmission further includes the following operation. A second multiplexer multiplexes the n optical signals added with the in-band OAM information with the modulation frequencies of k1 to kn, to obtain multiplexed optical signals.

Optionally, the method for optical signal transmission further includes the following operations.

A second photodetector in a second detection unit directly performs optical-to-electrical conversion of the multiplexed optical signals, to generate electrical signals at multiple frequencies.

A second multi-frequency demodulation unit in the second detection unit extracts and demoduates, from the electrical signals at the multiple frequencies, n pieces of low-speed in-band OAM information with the modulation frequencies of k1 to kn, respectively.

Optionally, the method for optical signal transmission further includes the following operation. The multiplexed optical signals are transmitted to the first equipment through an optical fibre link.

In the embodiments of the present disclosure, when the local-end equipment receives the optical signals, the local-end equipment converts, through the first detection unit (including a photodetector and a frequency demodulation unit), the optical signals into the electrical signals, and demodulates n wavelengths, respectively. In such way, the system architecture is greatly simplified, and the system cost is significantly reduced. Moreover, when transmitting the optical signals, the local-end equipment can add, on the optical signals with the frequency of f and the wavelengths of λ1 to λn, the in-band optical layer OAM information with the modulation frequencies of kl to kn, respectively, so as to achieve transmitting the optical signals from the local-end to the far-end; the local-end equipment directly performs, through the second detection unit, optical-to-electrical conversion of the n WDM signals with different wavelengths, to generate the electrical signals with the multiple frequencies; and the local-end equipment simultaneously extracts and demodulates, through the multi-frequency demodulation unit, the N pieces of low-speed in-band OAM information with the modulation frequencies of k1 to kn. In such way, the system architecture is simplified, and the system cost is reduced.

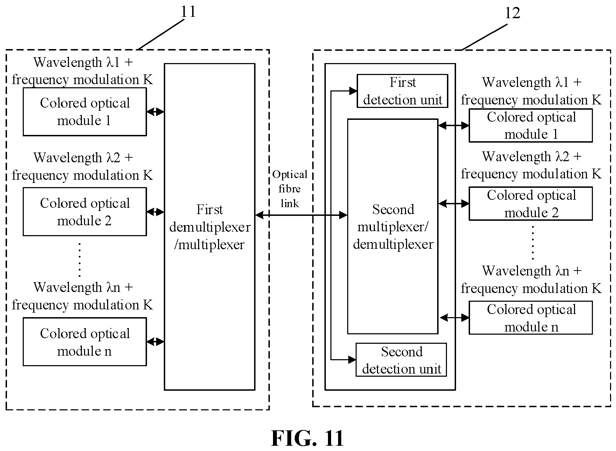

FIG. 11 shows an architecture of a system for bidirectional optical signal transmission between the far-end equipment (the first equipment) and the local-end equipment (the second equipment). A processing process of the optical signals is the same as that in FIG. 5 and FIG. 10, which is not described herein again.

An embodiment of the present disclosure further provides an apparatus for optical signal transmission, applied to a first equipment. The first equipment includes n first colored optical modules, where n is an integer greater than 1. The apparatus includes as follows.

The n first colored optical modules are configured to respectively transmit n optical signals with a frequency of f and wavelengths of λ1 to λn, λ1 to λn being different from each other, and in-band Operation, Administration and Maintenance (OAM) information of optical layer with modulation frequencies of kl to kn being added on the n optical signals with the wavelengths of λ1 to λn, respectively.

Optionally, the apparatus for optical signal transmission further includes a first multiplexer. The first multiplexer is configured to multiplex the n optical signals added with the in-band OAM information with the modulation frequencies of kl to kn, to obtain multiplexed optical signals.

Optionally, the first multiplexer is configured to transmit the multiplexed optical signals to a second equipment through an optical fibre link.

Optionally, f is greater than any one of k1 to kn.

Optionally, the apparatus for optical signal transmission further includes the n first colored optical modules being configured to receive optical signals transmitted from a second equipment and demultiplexed by a first demultiplexer.

It is to be noted that the apparatus corresponds to the method shown in FIG. 4. All implementations in the above method embodiments are applicable to the embodiments of the apparatus, and will achieve the same technical effects.

An embodiment of the present disclosure further provides a device for optical signal transmission. The device includes n first colored optical modules, where n is an integer greater than 1. The n first colored optical modules are configured to respectively transmit n optical signals with a frequency of f and wavelengths of λ1 to λn, λ1 to λn being different from each other, and in-band Operation, Administration and Maintenance (OAM) information of optical layer with modulation frequencies of kl to kn being added on the n optical signals with the wavelengths of λ1 to λn, respectively.

Optionally, the device for optical signal transmission further includes a first multiplexer. The first multiplexer is configured to multiplex the n optical signals added with the in-band OAM information with the modulation frequencies of kl to kn, to obtain multiplexed optical signals.

Optionally, the first multiplexer is configured to transmit the multiplexed optical signals to a second equipment through an optical fibre link.

Optionally, f is greater than any one of k1 to kn.

Optionally, the device for optical signal transmission further includes the n first colored optical modules being configured to receive optical signals transmitted from a second equipment and demultiplexed by a first demultiplexer.

It is to be noted that the transmitting/sending end device corresponds to the method shown in FIG. 4. All implementations in the above method embodiments are applicable to the embodiments of the device, and will achieve the same technical effects.

An embodiment of the present disclosure further provides an apparatus for optical signal transmission, applied to a second equipment. The second equipment includes n second colored optical modules, where n is an integer greater than 1. The apparatus includes a receiving module.

The receiving module is configured to receive multiplexed optical signals transmitted from a first equipment, the multiplexed optical signals being optical signals obtained by multiplexing n optical signals with a frequency of f and wavelengths of λ1 to λn, added with in-band Operation, Administration and Maintenance (OAM) information with modulation frequencies of kl to kn, respectively.

Optionally, the receiving module is configured to receive, through an optical fibre link, the multiplexed optical signals transmitted from the first equipment.

Optionally, the apparatus for optical signal transmission further includes a first detection unit. The first detection unit includes a first photodetector and a first multi-frequency demodulation unit.

The first photodetector is configured to directly perform optical-to-electrical conversion of the multiplexed optical signals, to generate electrical signals at a plurality of frequencies.

The first multi-frequency demodulation unit is configured to extract and demodulate, from the electrical signals at the plurality of frequencies, n pieces of low-speed in-band OAM information with the modulation frequencies of k1 to kn, respectively.

Optionally, the apparatus for optical signal transmission further includes a second demultiplexer, configured to perform demultiplexing on the multiplexed optical signals to obtain the n optical signals, the n optical signals having the wavelengths of λ1 to λn and being added with the in-band OAM information with the modulation frequencies of kl to kn, respectively.

Optionally, the second demultiplexer is configured to transmit each of the n optical signals to a respective one of the n second colored optical modules.

Optionally, f is greater than any one of k1 to kn.

Optionally, the apparatus for optical signal transmission further includes the n second colored optical modules being configured to respectively transmit n optical signals with the frequency of f and the wavelengths of λ1 to λn, λ1 to λn being different from each other, and in-band OAM information of optical layer with the modulation frequencies of kl to kn being added on the n optical signals with the wavelengths of λ1 to λn, respectively.

Optionally, the apparatus for optical signal transmission further includes a second multiplexer, configured to multiplex the n optical signals added with the in-band OAM information with the modulation frequencies of k1 to kn, to obtain multiplexed optical signals.

Optionally, the apparatus for optical signal transmission further includes: a second detection unit. The second detection unit includes a second photodetector and a second multi-frequency demodulation unit.

The second photodetector is configured to directly perform optical-to-electrical conversion of the multiplexed optical signals, to generate electrical signals at a plurality of frequencies.

The second multi-frequency demodulation unit is configured to extract and demodulate, from the electrical signals at the plurality of frequencies, n pieces of low-speed in-band OAM information with the modulation frequencies of k1 to kn, respectively.

Optionally, the apparatus for optical signal transmission further includes that: the multiplexed optical signals are transmitted to the first equipment through an optical fibre link.

It is to be noted that the apparatus corresponds to the method shown in FIG. 6 or FIG. 7. All implementations in the above method embodiments are applicable to the embodiments of the apparatus, and will achieve the same technical effects.

An embodiment of the present disclosure further provides a device for optical signal transmission. The device includes n second colored optical modules, where n is an integer greater than 1. The device further includes a receiver.

The receiver is configured to receive multiplexed optical signals transmitted from a first equipment, the multiplexed optical signals being optical signals obtained by multiplexing n optical signals with a frequency of f and wavelengths of λ1 to λn, added with in-band Operation, Administration and Maintenance (OAM) information with modulation frequencies of kl to kn, respectively.

Optionally, the receiver is configured to receive, through an optical fibre link, the multiplexed optical signals transmitted from the first equipment.

Optionally, the device for optical signal transmission further includes a first detection unit. The first detection unit includes a first photodetector and a first multi-frequency demodulation unit.

The first photodetector is configured to directly perform optical-to-electrical conversion of the multiplexed optical signals, to generate electrical signals at a plurality of frequencies.

The first multi-frequency demodulation unit is configured to extract and demodulate, from the electrical signals at the plurality of frequencies, n pieces of low-speed in-band OAM information with the modulation frequencies of k1 to kn, respectively.

Optionally, the device for optical signal transmission further includes a second demultiplexer, configured to perform demultiplexing on the multiplexed optical signals to obtain the n optical signals, the n optical signals having the wavelengths of λ1 to λn and being added with the in-band OAM information with the modulation frequencies of k1 to kn, respectively.

Optionally, the second demultiplexer is configured to transmit each of the n optical signals to a respective one of the n second colored optical modules.

Optionally, f is greater than any one of k1 to kn.

Optionally, the device for optical signal transmission further includes the n second colored optical modules being configured to respectively transmit n optical signals with the frequency of f and the wavelengths of λ1 to λn, λ1 to λn being different from each other, and in-band OAM information of optical layer with the modulation frequencies of k1 to kn being added on the n optical signals with the wavelengths of λ1 to λn being superimposed with, respectively.

Optionally, the device for optical signal transmission further includes a second multiplexer, configured to multiplex the n optical signals added with the in-band OAM information with the modulation frequencies of k1 to kn, to obtain multiplexed optical signals.

Optionally, the apparatus for optical signal transmission further includes: a second detection unit. The second detection unit includes a second photodetector and a second multi-frequency demodulation unit.

The second photodetector is configured to directly perform optical-to-electrical conversion of the multiplexed optical signals, to generate electrical signals at multiple frequencies.

The second multi-frequency demodulation unit is configured to extract and demodulate, from the electrical signals at the plurality of frequencies, n pieces of low-speed in-band OAM information with the modulation frequencies of k1 to kn, respectively.

Optionally, the device for optical signal transmission further includes that: the multiplexed optical signals are transmitted to the first equipment through an optical fibre link.

It is to be noted that the receiving end device corresponds to the method shown in FIG. 6 or FIG. 7. All implementations in the above method embodiments are applicable to the embodiments of the device, and will achieve the same technical effects.

An embodiment of the present disclosure further provides a computer-readable storage medium, including an instruction that, when executed by a computer, causes the computer to perform the method described in FIG. 4 or FIG. 6 or FIG. 7.

Those of ordinary skill in the art may realize that the units and algorithm operations of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may implement the described functions for each specific application by use of different methods, but such implementation shall not be considered beyond the scope of the present disclosure.

Those skilled in the art may clearly learn about that specific working processes of the system, apparatus, and units described above may refer to the corresponding processes in the above method embodiments and will not be elaborated herein for ease and briefness of description.

In the embodiments provided by the present disclosure, it is to be understood that the disclosed apparatus and method may be implemented in other ways. For example, the apparatus embodiments described above are only schematic, and for example, division of the units is only logic function division, and other division manners may be adopted during practical implementation. For another example, a plurality of units or components may be combined or integrated into another system, or some characteristics may be neglected or not executed. In addition, the displayed or discussed mutual coupling or direct coupling or communication connection may be indirect coupling or communication connection through some interfaces, apparatuses or units, and may be in electrical, mechanical or other forms.

The units described as separate components may or may not be physically separated. The components displayed as units may or may not be physical units, that is, the components may be located in one place, or may be distributed on the plurality of network units. Part or all of the units may be selected according to actual requirements to achieve the purposes of the solutions of the embodiments.

In addition, the functional units in the various embodiments of the present disclosure may be integrated into one processing unit, or each unit may exist alone physically, or two or more than two units may be integrated into one unit.

If the function is implemented in the form of the software functional unit and sold or used as an independent product, it can be stored in the computer readable storage medium. Based on such an understanding, the technical solutions of the present disclosure substantially or parts making contributions to the related art or part of the technical solutions may be embodied in form of software product. The computer software product is stored in a storage medium, including a plurality of instructions configured to enable a computer device (which may be a personal computer, a server, a network device, or the like) to execute all or part of the operations of the method in each embodiment of the present disclosure. The foregoing storage medium includes: a USB flash disk, a mobile Hard Disk Drive (HDD), a Read-Only Memory (ROM), a Random Access Memory (RAM), a magnetic disk, an optical disk and other media that can store program codes.

In addition, it is to be noted that in the apparatus and method of the present disclosure, it is obvious that each component or each operation can be decomposed and/or recombined. These decompositions and/or recombinations should be considered equivalent solutions of the present disclosure. In addition, operations of performing the above series of processes may naturally and chronologically be performed according to a described order, but need not necessarily be performed in chronological order, and some operations may be performed in parallel or independently of each other. Those of ordinary skill in the art can understand that all or any operations or components of the method and apparatus of the present disclosure may be implemented in any computing apparatus (including a processor, a storage medium, and the like) or a network of the computing apparatus in hardware, firmware, software, or a combination thereof, which can be implemented by those of ordinary skill in the art using their basic programming skills after reading the description of the present disclosure.

Therefore, the objective of the present disclosure may also be achieved by running a program or a set of programs on any computing apparatus. The computing apparatus may be a well-known general apparatus. Therefore, the objective of the present disclosure may also be achieved only by providing a program product including a program code for implementing the method or apparatus. That is to say, such a program product also constitutes the present disclosure, and a storage medium in which such a program product is stored also constitutes the present disclosure. It is obvious that the storage medium may be any well-known storage medium or any storage medium developed in the future. It is also to be noted that in the apparatus and method of the present disclosure, it is obvious that each component or each operation can be decomposed and/or recombined. These decompositions and/or recombinations should be considered equivalent solutions of the present disclosure. In addition, operations of performing the above series of processes may naturally and chronologically be performed according to a described order, but need not necessarily be performed in chronological order. Some operations may be performed in parallel or independently of each other.

It is to be noted that it is to be understood that the division of each module is only a division of logical functions, and in actual implementation, all or part of the modules may be integrated into a physical entity, or may be physically separated. In addition, these modules may all be implemented in the form of calling software through processing elements, or may also all be implemented in hardware. Alternatively, some modules may also be implemented in the form of calling software through processing elements, and some modules may be implemented in hardware. For example, a determination module may be a processing element disposed separately, or may be implemented by being integrated in some chip of the above apparatus. In addition, the determination module may also be stored in a memory of the above apparatus in the form of a program code. Functions of the determination module are called and performed by a certain processing element of the above apparatus. The implementation of other modules is similar to that of the determination module. In addition, all or part of these modules may be integrated together or implemented independently. The processing element described here may be an integrated circuit and has a signal processing capacity. During implementation, each operation of the method or each module may be completed by an integrated logical circuit of hardware in the processing element or an instruction in a software form.

For example, each module, unit, sub-unit or sub-module may be one or more integrated circuits configured to implement the above methods, for example, one or more Application Specific Integrated Circuits (ASICs), or, one or more microprocessors (Digital Signal Processors (DSPs)), or one or more Field Programmable Gate Arrays (FPGAs), or the like. For another example, when a certain module is implemented in the form of calling program codes by a processing element, the processing element may be a general processor, such as a Central Processing Unit (CPU) or other processors that may call program codes. For another example, these modules may be integrated together and implemented as a System-On-a-Chip (SOC).

Terms "first", "second" and the like in the description and claims of the present disclosure are used for distinguishing similar objects rather than describing a specific sequence or a precedence order. It is to be understood that the data used in such a way may be exchanged where appropriate, so that the embodiments of the present disclosure described here are implemented in an order other than those illustrated or described herein. In addition, terms "include" and "have" and any variations thereof are intended to cover non-exclusive inclusions. For example, processes, methods, systems, products or devices comprising a series of operations or units are not necessarily limited to those operations or units explicitly listed, but may include other operations or units not expressly listed or inherent to such processes, methods, products or devices. In addition, "and/or" is used in the specification and claims to indicate at least one of the connected objects. For example, 'A and/or B and/or C' indicates seven cases, that is, individual A is included, individual B is included, individual C is included, both A and B exist, both B and C exist, both A and C exist, and A, B, and C all exist. Similarly, the use of "at least one of A or B" in the specification and claims should be understood as "separate A, separate B, or both A and B".

The above description is optional implementations of the present disclosure, and it should be noted that persons of ordinary skill in the art may also make several improvements and refinements without departing from the principle of the present disclosure, and it should be considered that these improvements and refinements shall all fall within the protection scope of the present disclosure.

## Claims

1. A method for optical signal transmission, applied to a first equipment, the first equipment comprising n first colored optical modules, n being an integer greater than 1; and the method comprising:
respectively transmitting, from the n first colored optical modules, n optical signals with a frequency of f and wavelengths of λ1 to λn, λ1 to λn being different from each other, and in-band Operation, Administration and Maintenance (OAM) information of optical layer with modulation frequencies of k1 to kn being added on the n optical signals with the wavelengths of λ1 to λn, respectively.

2. The method for optical signal transmission of claim 1, further comprising:
multiplexing, by a first multiplexer, the n optical signals added with the in-band OAM information with the modulation frequencies of k1 to kn, to obtain multiplexed optical signals.

3. The method for optical signal transmission of claim 2, further comprising:
transmitting the multiplexed optical signals to a second equipment through an optical fibre link.

4. The method for optical signal transmission of claim 1, wherein f is greater than any one of k1 to kn.

5. The method for optical signal transmission of claim 1, further comprising:
receiving, by the n first colored optical modules, optical signals transmitted from a second equipment and demultiplexed by a first demultiplexer.

6. A method for optical signal transmission, applied to a second equipment, the second equipment comprising n second colored optical modules, n being an integer greater than 1; and the method comprising:
receiving multiplexed optical signals transmitted from a first equipment, the multiplexed optical signals are being optical signals obtained by multiplexing n optical signals with a frequency of f and wavelengths of λ1 to λn, added with in-band Operation, Administration and Maintenance (OAM) information with modulation frequencies of kl to kn, respectively.

7. The method for optical signal transmission of claim 6, wherein receiving the multiplexed optical signals transmitted from the first equipment comprises:
receiving the multiplexed optical signals transmitted from the first equipment through an optical fibre link.

8. The method for optical signal transmission of claim 6, further comprising:
directly performing, by a first photodetector in a first detection unit, optical-to-electrical conversion of the multiplexed optical signals, to generate electrical signals at a plurality of frequencies; and
extracting and demodulating, by a first multi-frequency demodulation unit in the first detection unit, from the electrical signals at the plurality of frequencies, n pieces of low-speed in-band OAM information with the modulation frequencies of kl to kn, respectively.

9. The method for optical signal transmission of claim 8, further comprising:
demultiplexing, by a second demultiplexer, the multiplexed optical signals, to obtain the n optical signals, the n optical signals having the wavelengths of λ1 to λn and being added with the in-band OAM information with the modulation frequencies of kl to kn, respectively.

10. The method for optical signal transmission of claim 9, further comprising:
transmitting, by the second demultiplexer, each of the n optical signals obtained after the demultiplexing, to a respective one of the n second colored optical modules.

11. The method for optical signal transmission of claim 6, wherein f is greater than any one of k1 to kn.

12. The method for optical signal transmission of claim 6, further comprising:
respectively transmitting, from the n second colored optical modules, n optical signals with the frequency of f and the wavelengths of λ1 to λn, λ1 to λn being different from each other, and in-band OAM information of optical layer with the modulation frequencies of kl to kn being added on the n optical signals with the wavelengths of λ1 to λn, respectively.

13. The method for optical signal transmission of claim 12, further comprising:
multiplexing, by a second multiplexer, the n optical signals added with the in-band OAM information with the modulation frequencies of k1 to kn, to obtain multiplexed optical signals.

14. The method for optical signal transmission of claim 13, further comprising:
directly performing, by a second photodetector in a second detection unit, optical-to-electrical conversion of the multiplexed optical signals, to generate electrical signals at a plurality of frequencies; and
extracting and demodulating, by a second multi-frequency demodulation unit in the second detection unit, from the electrical signals at the plurality of frequencies, n pieces of low-speed in-band OAM information with the modulation frequencies of k1 to kn, respectively.

15. The method for optical signal transmission of claim 13, further comprising:
transmitting the multiplexed optical signals to the first equipment through an optical fibre link.

16. An apparatus for optical signal transmission, applied to a first equipment, the first equipment comprising n first colored optical modules, n being an integer greater than 1; and the apparatus comprising:
the n first colored optical modules being configured to transmit n optical signals with a frequency of f and wavelengths of λ1 to λn, respectively, λ1 to λn being different from each other, and in-band Operation, Administration and Maintenance (OAM) information of optical layer with modulation frequencies of k1 to kn being added on the n optical signals with the wavelengths of λ1 to λn, respectively.

17. The apparatus for optical signal transmission of claim 16, further comprising:
a first multiplexer, configured to multiplex the n optical signals added with the in-band OAM information with the modulation frequencies of k1 to kn, to obtain multiplexed optical signals.

18. The apparatus for optical signal transmission of claim 17, wherein the first multiplexer is configured to transmit the multiplexed optical signals to a second equipment through an optical fibre link.

19. The apparatus for optical signal transmission of claim 16, wherein f is greater than any one of kl to kn.

20. The apparatus for optical signal transmission of claim 16, further comprising:
the n first colored optical modules being configured to receive optical signals transmitted from a second equipment and demultiplexed by a first demultiplexer.

21. A device for optical signal transmission, comprising n first colored optical modules, n being an integer greater than 1;
the n first colored optical modules being configured to transmit n optical signals with a frequency of f and wavelengths of λ1 to λn, respectively, λ1 to λn being different from each other, and in-band Operation, Administration and Maintenance (OAM) information of optical layer with modulation frequencies of k1 to kn being added on the n optical signals with the wavelengths of λ1 to λn, respectively.

22. An apparatus for optical signal transmission, applied to a second equipment, the second equipment comprising n second colored optical modules, n being an integer greater than 1; and the apparatus comprising:
a receiving module, configured to receive multiplexed optical signals transmitted from a first equipment, the multiplexed optical signals being optical signals obtained by multiplexing n optical signals with a frequency of f and wavelengths of λ1 to λn, added with in-band Operation, Administration and Maintenance (OAM) information with modulation frequencies of kl to kn, respectively.

23. The apparatus for optical signal transmission of claim 22, wherein the receiving module is configured to receive, through an optical fibre link, the multiplexed optical signals transmitted from the first equipment.

24. The apparatus for optical signal transmission of claim 22, further comprising: a first detection unit, the first detection unit comprising a first photodetector and a first multi-frequency demodulation unit; wherein
the first photodetector is configured to directly perform optical-to-electrical conversion of the multiplexed optical signals, to generate electrical signals at a plurality of frequencies; and
the first multi-frequency demodulation unit is configured to extract and demodulate, from the electrical signals at the plurality of frequencies, n pieces of low-speed in-band OAM information with the modulation frequencies of kl to kn, respectively.

25. The apparatus for optical signal transmission of claim 22, further comprising:
a second demultiplexer, configured to demultiplex the multiplexed optical signals to obtain the n optical signals, the n optical signals having the wavelengths of λ1 to λn and being added with the in-band OAM information with the modulation frequencies of k1 to kn, respectively.

26. The apparatus for optical signal transmission of claim 25, wherein
the second demultiplexer is configured to transmit each of the n optical signals to a respective one of the n second colored optical modules.

27. The apparatus for optical signal transmission of claim 21, wherein f is greater than any one of kl to kn.

28. The apparatus for optical signal transmission of claim 22, further comprising:
the n second colored optical modules being configured to transmit n optical signals with the frequency of f and the wavelengths of λ1 to λn, respectively, λ1 to λn being different from each other, and in-band OAM information of optical layer with the modulation frequencies of kl to kn being added on the n optical signals with the wavelengths of λ1 to λn, respectively.

29. The apparatus for optical signal transmission of claim 28, further comprising:
a second multiplexer, configured to multiplex the n optical signals added with the in-band OAM information with the modulation frequencies of k1 to kn, to obtain multiplexed optical signals.

30. The apparatus for optical signal transmission of claim 29, further comprising: a second detection unit, the second detection unit comprising a second photodetector and a second multi-frequency demodulation unit; wherein
the second photodetector is configured to directly perform optical-to-electrical conversion of the multiplexed optical signals, to generate electrical signals at a plurality of frequencies; and
the second multi-frequency demodulation unit is configured to extract and demodulate, from the electrical signals at the plurality of frequencies, n pieces of low-speed in-band OAM information with the modulation frequencies of kl to kn, respectively.

31. The apparatus for optical signal transmission of claim 30, wherein
the multiplexed optical signals are transmitted to the first equipment through an optical fibre link.

32. A device for optical signal transmission, comprising n second colored optical modules, n being an integer greater than 1; and the device further comprising:
a receiver, configured to receive multiplexed optical signals transmitted from a first equipment, the multiplexed optical signals being optical signals obtained by multiplexing n optical signals with a frequency of f and wavelengths of λ1 to λn, added with in-band Operation, Administration and Maintenance (OAM) information with modulation frequencies of kl to kn, respectively.

33. A computer-readable storage medium, comprising an instruction that, when executed by a computer, causes the computer to perform the method of any one of claims 1 to 5, or the method of any one of claims 6 to 15.
